# EUROPÄISCHE PATENTANMELDUNG

(11) **EP 2 337 429 A2**
(43) Veröffentlichungstag der Anmeldung: **22.06.2011**
(21) Anmeldenummer: 10015196.8
(22) Anmeldetag: 01.12.2010
(51) Int. Cl.: H05B 37/02

(54) **Präsenz- oder Bewegungsmelder**

(30) Priorität: 17.12.2009 DE 202009017072 U
(71) Anmelder: ESYLUX GmbH, 22926 Ahrensburg (DE)
(72) Erfinder: Zota, Heiko, 22926 Ahrensburg (DE); Trölitzsch, Wilko, 23923 Lockwisch (DE)
(74) Vertreter: Jaeschke, Rainer

(57) **Zusammenfassung**

Die Erfindung betrifft einen Präsenz- oder Bewegungsmelder, der eine Stromversorgungsschaltung, eine Sensorschaltung mit einem Sensor zum Erfassen der Präsenz oder der Bewegung und eine Auswerteschaltung zum Auswerten des Sensorsignals und zum Schalten wenigstens eines elektrischen Verbrauchers aufweist. Gemäß der Erfindung wird vorgeschlagen, dass die Stromversorgungsschaltung wenigstens einen Versorgungskondensator aufweist, der die Stromversorgung mit einer Versorgungsspannung für die Sensorschaltung und die Auswerteschaltung bildet, welche Versorgungsspannung kleiner ist als die wechselförmige Netzspannung, an welcher der Melder angeschlossen ist, und dass die Stromversorgungsschaltung mit einer Synchronisationsschaltung versehen ist, die ein Aufladen des Versorgungskondensators durch Synchronisation der Netzspannung bewirkt derart, dass ein Aufladen des Versorgungskondensators in einem Zeitabschnitt erfolgt, in der die tatsächliche Spannung der Netzspannung kleiner ist als die maximale Speisespannung des Versorgungskondensators.

## Beschreibung

Die Erfindung betrifft einen Präsenz- oder Bewegungsmelder, der eine Stromversorgungsschaltung, eine Sensorschaltung mit einem Sensor zum Erfassen der Präsenz oder der Bewegung und eine Auswerteschaltung zum Auswerten des Sensorsignals und zum Schalten wenigstens eines elektrischen Verbrauchers aufweist. Auch betrifft die Erfindung eine Leiterplattenanordnung für einen derartigen Präsenz- oder Bewegungsmelder.

Präsenz- oder Bewegungsmelder sind in den unterschiedlichsten Ausführungen und Empfindlichkeiten bekannt. Sie weisen einen Sensor auf, der in der Lage ist, die Präsenz oder eine Bewegung einer Person in einem Raum oder einem Gebiet zu erfassen. Es wird ein Ausgangssignal erzeugt, durch das eine Schaltvorrichtung für einen elektrischen Verbraucher, beispielsweise das Licht, geschaltet wird. Der prinzipielle Aufbau eines derartigen Präsenz- oder Bewegungsmelders ist grundsätzlich bekannt und bedarf daher keiner weiteren Erläuterung.

In der Regel werden Präsenz- oder Bewegungsmelder über die Netzspannung mit Energie versorgt. Die Netzspannung, also beispielsweise 230 Volt Wechselspannung, ist normalerweise in jedem Gebäude verfügbar. Die elektrischen und elektronischen Bauelemente der einzelnen Schaltkreise des Präsenz- oder Bewegungsmelders sind jedoch für eine niedrigere Betriebsspannung ausgelegt. Die Betriebsspannung ist häufig eine Gleichspannung und beträgt etwa 2,0 V bis 4,0 V und insbesondere 2,8 Volt. Für die Stromversorgung eines derartigen Präsenz- oder Bewegungsmelders ist es daher erforderlich, die zur Verfügung stehende wechselförmige Netzspannung gleichzurichten und auf die maximale Betriebsspannung der verbauten elektronischen Schaltungselemente zu transformieren. Die hierfür benötigten Bauelemente bauen jedoch relativ groß, so dass der Bewegungsmelder einen erhöhten Platzbedarf benötigt. Dies ist in vielen Fällen unerwünscht.

Der Erfindung liegt die Aufgabe zugrunde, einen Präsenz-oder Bewegungsmelder der eingangs geschilderten Art so auszubilden, dass die einzelnen Schaltungen insgesamt einen geringeren Platzbedarf benötigen.

Die Aufgabe wird gemäß der Erfindung **dadurch gelöst, dass** die Stromversorgungsschaltung wenigstens einen Versorgungskondensator aufweist, der die Stromversorgung mit einer Versorgungsspannung für die Sensorschaltung und die Auswerteschaltung bildet, welche Versorgungsspannung kleiner ist als die wechselförmige Netzspannung, an welcher der Melder angeschlossen ist, und dass die Stromversorgungsschaltung mit einer Synchronisationsschaltung versehen ist, die ein Aufladen des Versorgungskondensators durch Synchronisation mit der Netzspannung bewirkt derart, dass ein Aufladen des Versorgungskondensators in einem Zeitabschnitt erfolgt, in der die absolute Spannung der Netzspannung kleiner ist als die maximale Speisespannung des Versorgungskondensators. Eine derartige Ausbildung der Stromversorgungsschaltung hat den Vorteil, dass auf groß dimensionierte Kondensatoren, die für die Gleichrichtung der wechselförmigen Netzspannung erforderlich sind, verzichtet werden kann. Vielmehr ist es ausreichend, einen Versorgungskondensator mit einer Kapazität vorzusehen, die ausreicht, die einzelnen Schaltkreise mit Energie bis zum nächsten Aufladevorgang bei der taktweisen Aufladung zu versorgen. Dieser Versorgungskondensator kann eine entsprechend geringere Kapazität aufweisen und entsprechend klein bauen. Dadurch ist es möglich, die gesamte Schaltung des Präsenz- oder Bewegungsmelders im Vergleich zu bekannten Meldern baulich sehr klein auszuführen.

Weiterhin ist es möglich, bei einer derartigen Schaltung auf eine Transformation der Netzspannung auf die niedrigere Versorgungsspannung der einzelnen Schaltungen zu verzichten. Auch hierdurch werden Bauelemente eingespart, wodurch der Schaltungsaufbau weiter verkleinert werden kann.

Es kann beispielsweise vorgesehen sein, dass die Netzspannung 230 Volt beträgt. Die Versorgungsspannung für die einzelnen Schaltungen des Präsenz- oder Bewegungsmelders beträgt 24 Volt Gleichspannung. Diese 24 Volt Gleichspannung wird mit an sich bekannten Mitteln auf die für die Auswerteschaltung und Sensorschaltung benötigten 2, 8 Volt in einer an sich bekannten Halbleiterschaltung erniedrigt. Die Versorgungsspannung von 24 Volt wird durch den Versorgungskondensator bereitgestellt, der mittels der Synchronisationsschaltung aufgeladen wird. Im einzelnen bewirkt die Synchronisationsschaltung, dass die anliegende Netzspannung nur dann an den Kondensator anliegt, wenn die tatsächliche Spannung weniger als die Speisespannung des Versorgungskondensators beträgt. In den Zeitabschnitten, in denen die absolute Spannung der wechselförmigen Netzspannung oberhalb von 24 Volt liegt, ist die Netzspannung nicht mit dem Versorgungskondensator verbunden. Bei herkömmlichen sinusförmigen Netzspannungen ist der Zeitabschnitt, in dem die tatsächliche Spannung unterhalb von 24 Volt liegt, relativ gering. Gleichwohl reicht dieses taktweise Aufladen aus, eine vollständige Aufladung des Versorgungskondensators zu bewirken.

Es steht somit eine im Wesentlichen konstante Gleichspannung von 24 Volt zur Verfügung. Diese Spannung kann als Versorgungsspannung für die anderen Schaltkreise verwendet werden. Der Stromverbrauch dieser Schaltungen ist relativ gering, so dass sich der Versorgungskondensator zwischen den aufeinander folgenden Aufladevorgängen nicht oder nur unvollständig entlädt. Eine kontinuierliche Versorgung der einzelnen Schaltkreise wird damit gewährleistet.

Es kann zweckmäßig sein, die Speisespannung etwas höher als die Versorgungsspannung zu wählen, beispielsweise 26 V. Dann ist der Zeitabschnitt, in welchem die Aufladung erfolgt, entsprechend länger. Die tatsächliche Dauer, für die der Versorgungskondensator mit der Netzspannung verbunden ist, hängt von den Eigenschaften der verwendeten Bauteile ab.

Es ist vorgesehen, dass die Synchronisationsschaltung so getaktet ist, dass sie ein Aufladen des Versorgungskondensators durch die wechselförmige Netzspannung derart bewirkt, dass der Versorgungskondensator im Bereich des Nulldurchgangs der Spannung aufgeladen wird. Im Bereich des Nulldurchgangs beträgt die absolute Spannung weniger als die maximale Speisespannung, so dass nur dort ein relativ langer Zeitabschnitt zur Verfügung steht, in dem der Kondensator aufgeladen werden kann. Die wechselförmige Netzspannung wird zudem von einer an sich bekannten Gleichrichtungsschaltung gleichgerichtet, so dass das Aufladen des Versorgungskondensators mit stets der gleichen Polarität erfolgt.

Aufgrund der Tatsache, dass die Netzspannung nur für eine relativ kurze Zeit den Präsenz- und Bewegungsmelder mit Strom versorgt, erfolgt kaum eine Leistungsaufnahme durch die einzelnen Schaltungen. Es wird daher kaum Wärme erzeugt, wodurch die Schaltung ebenfalls klein gebaut werden kann. Weiterhin wird durch diese Schaltung in günstiger Weise erreicht, dass der Stromverbrauch im Ruhezustand nahezu Null ist, da sich die Aufladung des Kondensators auf einen kurzen Zeitabschnitt einer Periode beschränkt. Gegebenenfalls kann der Zeitabschnitt auch kürzer ausfallen oder der Versorgungskondensator ist nicht in jeder Periode der Wechselspannung mit der Netzspannung verbunden.

Aufgrund des Schaltungsaufbaus der Stromversorgungsschaltung ist es möglich, die Schaltungen auf geringstem Platz anzuordnen. Es ist gemäß der Erfindung vorgesehen, dass die Bauelemente der Schaltungen auf einer mehrteiligen Leiterplatte angeordnet sind, deren Teilplatten über flexible Leiterbahnen in Verbindung stehen. Durch diese Anordnung kann die Leiterplatte ein-oder mehrfach gefaltet werden, so dass ein kompaktes Leiterplattenpaket entsteht, das platzsparend in einem Meldergehäuse angeordnet werden kann.

Besonders zweckmäßig ist es, wenn die einzelnen Bauelemente zumindest teilweise als Abstandshalter dienen und in der gefalteten Lage zwischen den einzelnen Teilplatten liegen. Dies hat den Vorteil, dass auf gesonderte Abstandhalter verzichtet werden kann. Die elektronischen Bauelemente sind in der Regel in einem elektrisch isolierendem Gehäuse angeordnet, so dass die Gehäuse der Bauelemente einer Teilplatte ohne Weiteres auf die Gehäuse der benachbarten Teilplatte gelegt werden können, ohne dass die Gefahr eines Kurzschlusses besteht. Auch können die Bauelemente unmittelbar auf die Unterseite der benachbarten Leiterplatte gelegt werden, ohne dass unerwünschte elektrische Verbindungen der dort befindlichen Kontaktpunkte entstehen.

Eines der größten Bauteile stellt bei einem derartigem Präsenz- oder Bewegungsmelder die Schalteinheit zum Schalten des elektrischen Verbrauchers dar. Dieses Schaltungselement wird so auf der Leiterplatte positioniert, dass es von zwei Teilplatten begrenzt ist. Der verbleibende Freiraum zwischen diesen Teilplatten kann für andere elektronische Bauelemente genutzt werden, beispielsweise für den Versorgungskondensator, der im Vergleich zu den anderen elektrischen oder elektronischen Bauelementen ebenfalls relativ groß ist.

Gemäß einer bevorzugten Ausführungsform der Erfindung ist vorgesehen, dass der Sensor der Sensorschaltung so an der Leiterplatte angeordnet ist, dass der Sensor in der gefalteten Lage der Leiterplatte exponiert an einer Stirnseite des gebildeten Leiterplattenpakets liegt. So kann beispielsweise vorgesehen sein, dass der Bewegungs-oder Präsenzmelder aus vier Teilplatten besteht, von denen drei Teilplatten über eine erste Achse verschwenkbar über einander gefaltet werden können. Die vierte Leiterplatte, die den Sensor trägt, ist an einer senkrecht zu den Faltachsen verlaufenden Seite einer endständigen Teilplatte angeordnet. Hierdurch wird bewirkt, dass diese vierte Teilplatte mit dem Sensor in der gefalteten Lage sich in Dickenrichtung des Leiterplattenpakets über eine Stirnseite desselben erstreckt. Somit liegt der Sensor frei zugänglich an einer Stirnseite des Leiterplattenpakets.

Es ist günstig, wenn die Anschlussleitungen für den Präsenz- und Bewegungsmelder auf der dem Sensor abgekehrten Stirnseite des Leiterplattenpakets aus diesen herausführen. Die Anschlussleitungen stören dann den Sensor nicht, so dass dessen Erfassungsbereich sehr groß sein kann. Es kann vorgesehen werden, dass das Meldergehäuse ein einseitig offenes vorzugsweise zylindrisches Gehäuse ist, dessen geschlossenes Ende als eine im Wesentlichen kalottenförmige Haube ausgebildet ist, in die der Sensor zumindest teilweise hineinragt. Aufgrund der faltbaren Ausbildung der Leiterplatte kann diese zu einem kompakten Paket gefaltet werden, das in dem zylindrischen Gehäuse aufgenommen werden kann. Der Sensor weist dann zu der kalottenförmigen Abschlusshaube und hat ein freies Blickfeld, während die Anschlussleitungen aus dem gegenüber liegenden Gehäuse hinausführen. Das Meldergehäuse kann somit äußerst kompakt ausgebildet sein.

Weiterhin kann vorgesehen sein, dass das Leiterplattenpaket vollständig in dem Meldergehäuse aufgenommen und in diesem vergossen ist. Hierdurch wird eine wasserdichte Ausbildung des Präsenz- und Bewegungsmelders bewirkt.

Es kann alternativ oder zusätzlich vorgesehen sein, dass das Meldergehäuse auf seiner der Haube abgekehrten offenen Seite durch ein Verschlusselement verschlossen ist. Dieses Verschlusselement kann beispielsweise nach dem Einführen des Leiterplattenpakets montiert werden. Das Meldergehäuse kann durch dieses Verschlusselement auch wasserdicht verschlossen sein.

Wie das Meldergehäuse montiert wird, ist grundsätzlich beliebig. Es kann vorgesehen sein, dass das Meldergehäuse durch eine Spreizfeder an einer Halteplatte gehalten ist, welche Spreizfeder an dem Verschlusselement befestigt ist. Auch kann vorgesehen sein, dass das Meldergehäuse an einer Halteplatte durch einen Klemmring gehalten ist. Insbesondere kann vorgesehen werden, dass beide Befestigungsmöglichkeiten alternativ für denselben Melder möglich sind. Es ist dann möglich, den Melder sowohl mittels der Spreizfeder als auch mittels des Klemmrings an einer Halteplatte zu montieren.

Der Klemmring kann einen Spreizring und einen Druckring aufweisen, die ineinander schiebbar sind derart, dass sich der Spreizring in der zusammen geschobenen Lage von Druckring und Spreizring von außen fest an das Meldergehäuse anlegt und in der auseinander gezogenen Lage zusammen mit dem Druckring von dem Meldergehäuse abziehbar ist. Ein derartiger zweiteiliger Klemmring kann in einfacher Weise im Spritzgussverfahren aus Kunststoff gefertigt werden.

Die Halteplatte kann beispielsweise die Deckenplatte einer abgehängten Decke eines Raumes sein. Hier ist es lediglich erforderlich, in der Deckenplatte eine Durchbrechung mit dem erforderlichen Durchmesser vorzusehen, der dem Außendurchmesser des Meldergehäuses entspricht. Auch ist es möglich, dass die Halteplatte Teil einer Schalterabdeckung ist, so dass der Präsenz-oder Bewegungsmelder mit einfachen Mitteln in eine Wanddose montiert werden kann. Die Länge des Meldergehäuses kann dabei so bemessen sein, dass es in die in der Regel genormten Wanddosen einer Hausinstallation passt.

Die Erfindung wird im Folgenden anhand der schematischen Zeichnung näher erläutert. Es zeigen:
- Figur 1: das Blockschaltbild der elektronischen Schaltung eines Präsenz- oder Bewegungsmelders gemäß der Erfindung,
- Figur 2: die Leiterplattenanordnung für die elektronische Schaltung gemäß Figur 1,
- Figur 3: die Stirnansicht der Leiterplattenanordnung in der gefalteten Lage,
- Figur 4: die Seitenansicht de Leiterplattenanordnung in der gefalteten Lage und
- Figur 5 a, b: die Montage des Präsenz- oder Bewegungsmelders an einer Halteplatte.

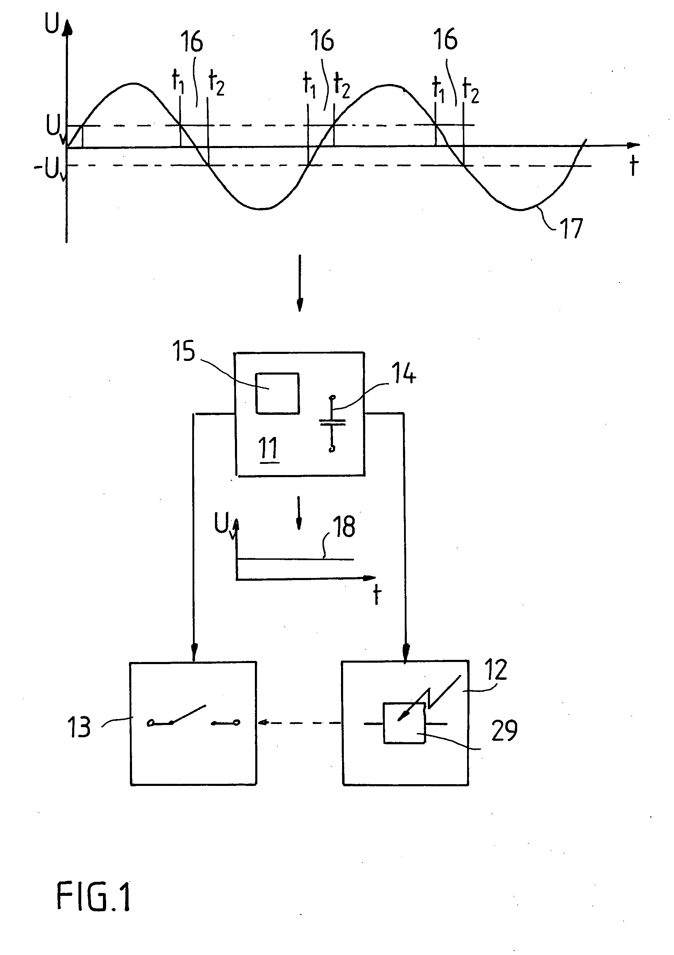

Die in Figur 1 der Zeichnung dargestellte Schaltung für einen Präsenz- oder Bewegungsmelder umfasst eine Stromversorgungsschaltung 11, die eine Sensorschaltung 12 und eine Auswertschaltung 13 mit der erforderlichen Betriebsspannung versorgt. Die Stromversorgungsschaltung 11 weist hierzu wenigstens einen Versorgungskondensator 14 auf, der durch eine Synchronisationsschaltung 15 taktweise durch die anliegende wechsel- und insbesondere sinusförmige Netzspannung aufgeladen wird. Im einzelnen ist die Anordnung so getroffen, dass die Synchronisationsschaltung den Versorgungskondensator 14 in einem Zeitabschnitt 16 der Netzspannung 17 mit dem Versorgungskondensator 14 verbindet, in welchem Zeitabschnitt die absolute Spannung des sinusförmigen Spannungsverlaufs geringer ist als die maximal zulässige Speisespannung 18. Dieser Zeitabschnitt ist bei der in der Zeichnung schematisch dargestellten sinusförmigen Netzspannung zwischen den Zeitpunkten t₁ und t₂ einer Periode gegeben, zwischen denen der Nulldurchgang liegt. In diesem Zeitabschnitt ist die absolute Spannung geringer als die maximal zulässige Speisespannung, so dass ein Aufladen des Versorgungskondensators 14 ohne weiteres möglich ist.

Die weiteren Schaltungselemente sind in der Zeichnung nicht dargestellt, Sie umfassen insbesondere eine Gleichrichterschaltung zum Gleichrichten der Wechselspannung. Im Blockschaltbild sind lediglich die wesentlichen Bauelemente dargestellt.

Hierdurch ist es möglich, zum einen auf eine aufwendige und entsprechend groß bauende Gleichrichtung der Netzspannung über die gesamte Periode zu verzichten. Zum anderen wird erreicht, dass die Schaltung des Präsenz-oder Bewegungsmelders nur kurzfristig mit der Netzspannung verbunden ist, so dass sich insgesamt ein geringer Stromverbrauch ergibt.

Der Versorgungskondensator 14 befindet sich demnach stets in einem zumindest nahezu vollständig aufgeladenen Zustand und ist in der Lage, die Sensorschaltung 12 und die Auswerteschaltung 13 mit der erforderlichen Gleichspannung Uᵥ zu versorgen. Es kann vorgesehen werden, dass die von dem Versorgungskondensator bereitgestellte Versorgungsspannung noch weiter reduziert wird. Diese hierfür erforderlichen elektronischen Bauelemente und Schaltungen sind allgemein bekannt und bedürfen daher keiner weiteren Erläuterung. Sie sind Bestandteil der Stromversorgungsschaltung.

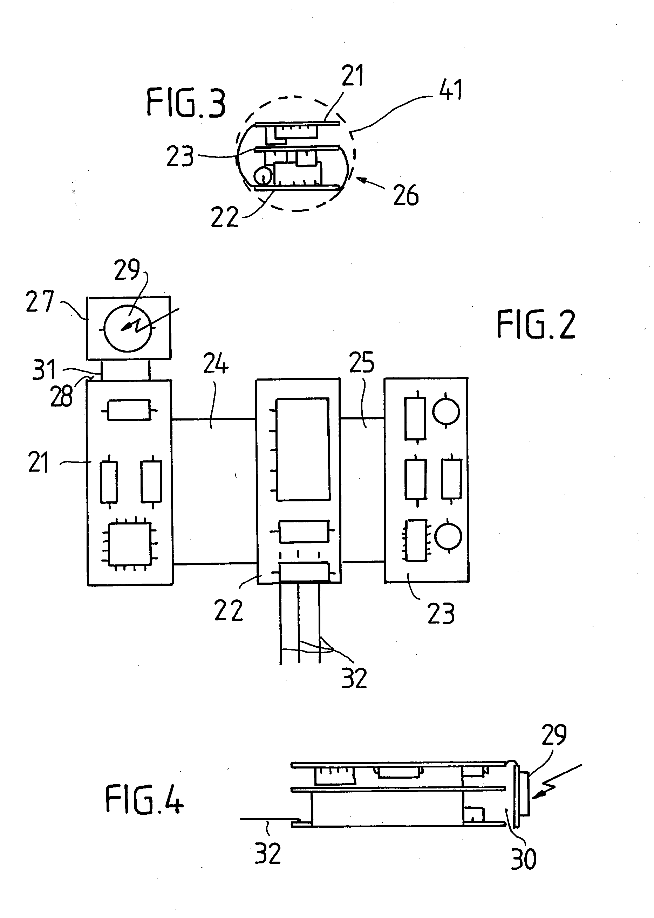

In Figur 2 ist eine mögliche Leiterplattenanordnung für einen derartigen Präsenz- oder Bewegungsmelder dargestellt. Die Leiterplatte besteht bei der in der Zeichnung dargestellten Ausführungsform aus drei nebeneinander liegenden Teilplatten 21, 22, 23, die mit den erforderlichen Bauelementen bestückt sind. Es ist hierbei nicht zwingend erforderlich, dass eine Schaltung des Präsenz- und Bewegungsmelders nur auf einer der Teilplatten angeordnet ist. Vielmehr können sich die Schaltungen auf mehrere Teilplatten verteilen. Die einzelnen Teilplatten stehen über flexible Leiterbahnen 24, 25 miteinander in Verbindung. Derartige flexible Leiterbahnen sind allgemein bekannt und bedürfen daher auch keiner weiteren Erläuterung.

Durch diese Anordnung ist es möglich, die an sich großflächige Leiterplatte nach der Bestückung und dem Verlöten zu einem kompakten Leiterplattenpaket 26 zusammenzufalten. Bei dem in der Zeichnung dargestellten Ausführungsbeispiel wird zunächst die in der Zeichnung rechte Leiterplatte 23 auf die mittlere Leiterplatte 22 geklappt. Schließlich wird die in der Zeichnung linke Leiterplatte 21 über die Leiterplatte 23 gelegt. Eine derartige Anordnung ist äußerst platzsparend. Insbesondere können die einzelnen Teilplatten 21, 22, 23 ohne weiteres übereinander gelegt werden, da die einzelnen Bauelemente in der Regel ein elektrisch isolierendes Gehäuse aufweisen, so dass elektrische Kurzschlüsse vermieden werden. Weiterhin ist es möglich, dass die Bauelemente ohne weitere Isolierung auf die Rückseite einer Leiterplatte gelegt werden können, ohne dass die Gefahr von unerwünschten leitenden Verbindungen zwischen den einzelnen Kontaktpunkten besteht. Gesonderte Abstandshalter zwischen den Leiterplatten in der zusammengelegten Lage sind daher nicht erforderlich.

Es ist ferner eine vierte Leiterplatte 27 vorgesehen, die an einer Stirnseite 28 der in der Zeichnung linken Leiterplatte 21 angeordnet ist, welche Stirnseite 28 senkrecht zu den Seiten der einzelnen Teilplatten verläuft, über welche die einzelnen Teilplatten 21, 22, 23 miteinander verbunden sind. Auf dieser vierten Leiterplatte 27 ist der Sensor 29 zum Erfassen der Präsenz oder der Bewegung so angeordnet, dass der Sensor durch Anklappen der vierten Leiterplatte 27 an die Stirnseite 30 des gebildeten Leiterplattenpakets 26 der Sensor 29 auf der dem Paket abgekehrten Seite der Leiterplatte 27 liegt.

Bei dem in der Zeichnung dargestellten Ausführungsbeispiel wird zunächst die rechte Teilleiterplatte 23 über die mittlere Teilleiterplatte 22 gelegt. Anschließend wird die linke Teilleiterplatte 21 über die dann die umgekehrt oben liegende rechte Teilleiterplatte 23 gelegt, so dass ein kompaktes Paket entsteht. Schließlich wird die an der linken Teilleiterplatte 21 befestigte Leiterplatte 27 nach unten über die Stirnseite 30 geklappt. Die flexiblen Leitungen 24, 25, 31 sind entsprechend lang ausgebildet, so dass ein Zusammenfalten nur in dieser Reihenfolge durchgeführt werden kann.

Auch diese vierte Leiterplatte 27 ist über flexible Leiterbahnen 31 mit der Teilplatte 21 verbunden. Hierdurch wird erreicht, dass die Leiterplatte in einfacher Weise an das Leiterplattenpaket 26 angelegt werden kann und der Sensor ein gutes Erfassungsfeld aufweist, da sein Gesichtsfeld nicht durch elektronische Bauelemente behindert wird. Weiterhin weist die elektronische Schaltung beispielsweise drei Anschlussdrähte 32 auf, die auf der der Stirnseite 30 gegenüber liegenden Seite aus dem Leiterplattenpaket 26 hinausführen. Die Anschlussleitungen 32 können mit einer beliebigen Teilplatte 21, 22, 23 verbunden sein.

Diese Leiterplattenanordnung erlaubt eine Bestückung von nur einer Seite. Eine automatische Bestückung ist daher möglich. Lediglich der Sensor muss von der anderen Seite her mit der Teilleiterplatte 27 verbunden werden. Dies kann auch durch eine Steckverbindung erfolgen.

Wie insbesondere aus Figur 3 ersichtlich, weisen die Teilplatten 21, 22, 23 einen hinreichend großen Abstand auf. Es sind daher keine Interferenzen oder dergleichen zu befürchten, so dass ein einwandfreier Betrieb des Präsenz- oder Bewegungsmelders möglich ist.

Das in Figur 3 dargestellte Leiterplattenpaket 26 wird in einem Meldergehäuse 41 angeordnet. Es ist vorgesehen, dass das Leiterplattenpaket 26 mit dem Sensor 29 so in das einseitig offene und zylindrische Meldergehäuse eingeschoben wird, dass der Sensor 29 mit seiner freien Vorderseite zumindest teilweise eine kalottenförmige stirnseitige Haube 42 eintaucht. Auf der dieser Haube 42 abgekehrten offenen Seite 43 des Gehäuses werden die Anschlusskabel 32 herausgeführt. Es kann vorgesehen sein, dass das Leiterplattenpaket 26 in dem Meldergehäuse 41 eingegossen ist. Es kann aber alternativ oder zusätzlich vorgesehen sein, dass die Seite 43 durch ein gesondertes Verschlusselement verschlossen wird. Dieses Verschlusselement ist in der Zeichnung nicht dargestellt und kann beispielsweise eine Spreizfeder zur Befestigung an einer Halteplatte aufweisen.

Im Einzelnen ist das Gehäuse 41 als hohlzylindrisches Bauelement ausgebildet, dessen eines Ende durch die kalottenförmige Haube 42 verschlossen ist. Von der anderen Seite 43 kann das Leiterplattenpaket 26 eingeschoben werden und in der eingeführten Lage entweder durch ein separates Verschlusselement oder aber durch eine Vergussmasse fest und wasserdicht gehalten werden. Das Leiterplattenpaket 26 wird durch das Gehäuse zudem in der gefalteten Lage gehalten. Nach dem Vergießen oder Verschließen des Gehäuses 41 befindet sich der Sensor zudem in der gewünschten Lage relativ zu der Haube 42, so dass er ein möglichst großes Gesichtsfeld hat. Dieses zylindrische Bauelement stellt den gesamten Präsenz- oder Bewegungsmelder dar.

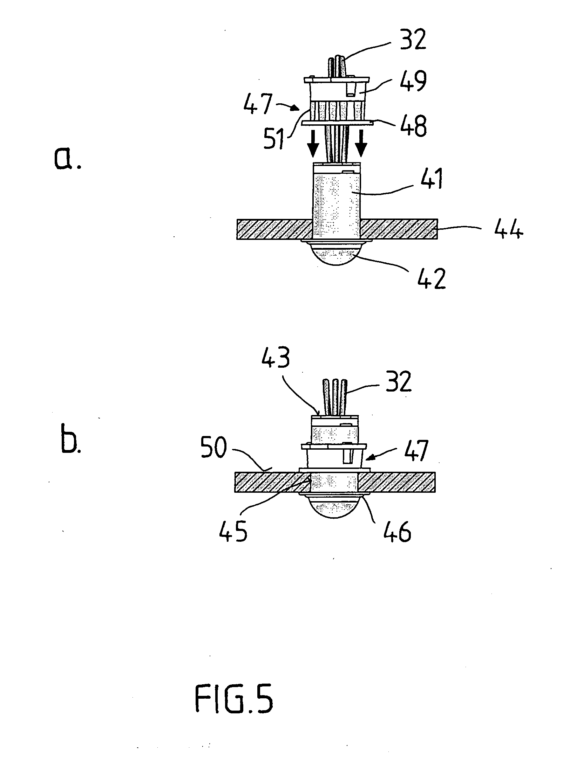

In der Figur 5 a, b ist die Befestigung des Meldergehäuses 41 an einer Halteplatte 44 dargestellt. Die Halteplatte 44 weist an der gewünschten Stelle eine Durchbrechung 45 mit dem erforderlichen Durchmesser für das Meldergehäuse 41 auf. Im Bereich der vorderen Verschlusskappe 42 ist das Meldergehäuse 41 mit einem Absatz 46 versehen, mit dem sich das Meldergehäuse 41 an der Halteplatte 44 abstützt. In der in Figur 5 a gezeigten vormontierten Lage befindet sich das Meldergehäuse 41 in einem vollständig eingeführten Zustand. Auf der der vorderen Verschlusskappe 42 abgekehrten Seite 43 ragen die Anschlussleitungen 31 in den Montageraum. Es ist ein Klemmring 47 vorgesehen, der sich aus einem Spreizring 48 und einem Druckring 49 zusammensetzt. In der in Figur 5 a gezeigten Lage sind der Spreizring 48 und der Druckring 49 auseinander gezogen, so dass der Klemmring 47 über die Außenwandung des Meldergehäuses 41 passt.

Sobald der Spreizring 48 auf der der Vorderseite abgekehrten Rückseite 50 der Halteplatte 44 zum Anliegen kommt, wird der Druckring 49 weiter in Richtung auf die Halteplatte nach unten geschoben. Die einzelnen Spreizarme 51 des Spreizrings 48 werden dabei durch eine konische Ausbildung der Innenwandung des Druckrings nach innen gedrückt, so dass sich diese mit dem Meldergehäuse 41 verklemmen. Ein sicherer Halt des Bewegungsmelders wird somit gewährleistet. Insbesondere muss durch diese Halterung keine Last aufgenommen werden, so dass eine derartige Klemmung vollkommen ausreichend für die gewünschte Fixierung des Melders ist.

Die Halteplatte 44 kann Bestandteil einer abgehängten Decke sein. Auch ist es möglich, dass die Halteplatte 44 Bestandteil eines Schalters ist und die Abdeckplatte für eine Installationsdose bildet. Es ist demnach möglich, den Bewegungsmelder auf kleinstem Raum auch nachträglich in eine bestehende Gebäudeinstallation einzubinden.

## Patentansprüche

1. Präsenz- oder Bewegungsmelder, der eine Stromversorgungsschaltung (11), eine Sensorschaltung (12) mit einem Sensor (29) zum Erfassen der Präsenz oder der Bewegung und eine Auswerteschaltung (13) zum Auswerten des Sensorsignals und zum Schalten wenigstens eines elektrischen Verbrauchers aufweist, **dadurch gekennzeichnet, dass** die Stromversorgungsschaltung (11) wenigstens einen Versorgungskondensator (14) aufweist, der die Stromversorgung mit einer Versorgungsspannung für die Sensorschaltung und die Auswerteschaltung bildet, welche Versorgungsspannung (Uᵥ) kleiner ist als die wechselförmige Netzspannung, an welcher der Melder angeschlossen ist, und dass die Stromversorgungsschaltung mit einer Synchronisationsschaltung (15) versehen ist, die ein Aufladen des Versorgungskondensators durch Synchronisation der Netzspannung bewirkt derart, dass ein Aufladen des Versorgungskondensators in einem Zeitabschnitt (16) erfolgt, in der die tatsächliche Spannung der Netzspannung kleiner ist als die maximale Speisespannung des Versorgungskondensators (14).

2. Präsenz- oder Bewegungsmelder nach Anspruch 1, **dadurch gekennzeichnet, dass** die Synchronisationsschaltung (15) so getaktet ist, dass sie ein Aufladen des Versorgungskondensators (14) durch die wechselförmige Netzspannung derart bewirkt, dass der Versorgungskondensator im Bereich des Nulldurchgangs aufgeladen wird.

3. Präsenz- oder Bewegungsmelder nach Anspruch 1 oder 2, **dadurch gekennzeichnet, dass** die Bauelemente der Schaltungen (11, 12, 13) auf einer mehrteiligen Leiterplatte (21) angeordnet sind, und die Teilplatten (21, 22, 23, 27) über flexible Leiterbahnen (24, 25, 31) in Verbindung stehen.

4. Präsenz- oder Bewegungsmelder nach Anspruch 3, **dadurch gekennzeichnet, dass** die einzelnen Bauelemente zumindest teilweise als Abstandshalter dienen und in der gefalteten Lage zwischen den einzelnen Teilplatten (21, 22, 23) liegen.

5. Präsenz- oder Bewegungsmelder nach Anspruch 3 oder 4, **dadurch gekennzeichnet, dass** der Sensor (29) der Sensorschaltung so an der Leiterplatte angeordnet ist, dass der Sensor in der gefalteten Lage der Leiterplatte exponiert an einer Stirnseite (30) des gebildeten Leiterplattenpakets (26) liegt.

6. Präsenz- oder Bewegungsmelder nach einem der Ansprüche 3 bis 5, **dadurch gekennzeichnet, dass** die Anschlussleitungen (32) für den Melder auf der dem Sensor (29) abgekehrten Stirnseite des Leiterplattenpakets (26) aus diesem herausführen.

7. Präsenz- oder Bewegungsmelder nach einem der Ansprüche 3 bis 6, **dadurch gekennzeichnet, dass** das Meldergehäuse (41) ein einseitig offenes Gehäuse ist, dessen geschlossenes Ende als eine im wesentlichen kalottenförmige Haube (42) ausgebildet ist, in die der Sensor (29) zumindest teilweise hineinragt.

8. Präsenz- oder Bewegungsmelder nach einem der Ansprüche 3 bis 7, **dadurch gekennzeichnet, dass** das Leiterplattenpaket (26) vollständig in dem Meldergehäuse aufgenommen und in diesem vergossen ist.

9. Präsenz- oder Bewegungsmelder nach Anspruch 7 oder 8, **dadurch gekennzeichnet, dass** das Meldergehäuse auf seiner offenen Seite (43) durch ein Verschlusselement verschlossen ist.

10. Präsenz- oder Bewegungsmelder nach einem der Ansprüche 3 bis 9, **dadurch gekennzeichnet, dass** das Meldergehäuse durch eine Spreizfeder an einer Halteplatte gehalten ist, die an dem Verschlusselement befestigt ist.

11. Präsenz- oder Bewegungsmelder nach einem der Ansprüche 3 bis 10, **dadurch gekennzeichnet, dass** das Meldergehäuse an einer Halteplatte durch einen Klemmring (47) gehalten ist.

12. Präsenz- oder Bewegungsmelder nach Anspruch 11, **dadurch gekennzeichnet, dass** der Klemmring (47) einen Spreizring (48) und einen Druckring (49) aufweist, die ineinander schiebbar sind derart, dass sich der Spreizring (48) in der zusammen geschobenen Lage des Spreizrings und des Druckrings von außen fest an das Meldergehäuse (41) anlegt und in der auseinander gezogenen Lage der Spreizring zusammen mit dem Druckring von dem Meldergehäuse abziehbar ist.

13. Präsenz- oder Bewegungsmelder nach einem der Ansprüche 3 bis 12, **dadurch gekennzeichnet, dass** das Meldergehäuse (41) eine im wesentlichen zylindrische Form aufweist.
